# FASCICULE DE BREVET EUROPEEN

(11) **EP 0 497 718 B1**
(45) Date de publication et mention de la délivrance du brevet: **29.03.1995**
(21) Numéro de dépôt: 92420038.9
(22) Date de dépôt: 31.01.1992
(51) Int. Cl.: D03C 1/14

(54) **Registre de ressorts pour ratières et autres mécaniques de tissage du type négatif.**
Federanordnung für Schaftmaschinen und andere negative Fachbildungsmechanismen
Spring unit for dobbies or other negative shed-forming mechanisms

(30) Priorité: 01.02.1991 FR 9101401
(43) Date de publication de la demande: 05.08.1992
(73) Titulaire: S.A. DES ETABLISSEMENTS STAUBLI (France), 74210 Faverges (FR)
(72) Inventeur: Froment, Jean-Paul, F-74210 Faverges (FR); Fumex, André, F-74290 Talloires (FR)
(74) Mandataire: Monnier, Guy

(56) Documents cités:
- EP-A- 0 353 875
- DE-A- 3 533 336
- FR-A- 2 626 013
- GB-A- 298 758

## Description

La présente invention a trait aux ratières et autres mécaniques de tissage du type négatif pour la formation de la foule sur les machines à tisser, et elle concerne plus particulièrement les registres de ressorts qui, dans ce genre de mécaniques, assurent le rappel des cadres de lisses manoeuvrés à l'aide de ces dernières.

On sait qu'effectivement les mécaniques du type négatif n'opèrent la commande positive des cadres de lisses que dans un seul sens de la course alternative de ceux-ci, si bien qu'il y a lieu de prévoir des moyens élastiques agencés de manière à assurer le rappel desdits cadres à l'autre extrémlité de la course. Ces moyens élastiques sont le plus souvent constitués par deux registres formés par des ressorts parallèles retenus entre deux agrafes d'attache dont l'une est fixée à une console ou râtelier solidaire de la structure fixe de la machine à tisser, tandis que l'autre est accrochée soit à l'extrémité de l'un des deux câbles prévus pour la manoeuvre de chaque cadre, soit au levier oscillant de renvoi associé au câble considéré.

On conçoit que les ressorts de chaque registre sont ainsi étirés lors de la commande positive du cadre par la mécanique, et, par traction élastique sur le câble ou sur le levier correspondant, ramènent ledit cadre à la position initiale dès que l'organe de manoeuvre envisagé de la mécanique est arrivé en fin de course.

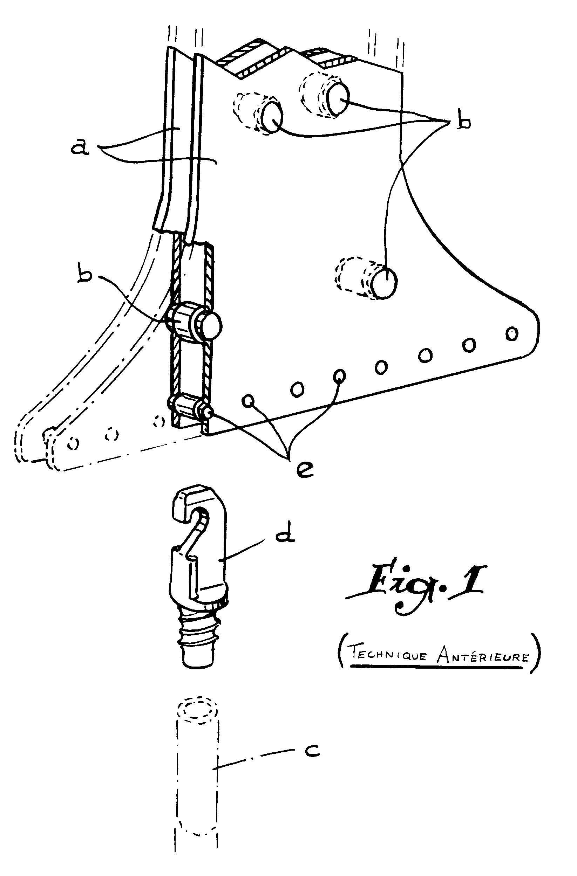

En pratique et comme on l'a illustré à la fig. 1 du dessin annexé aux présentes, chaque agrafe est généralement constituée par deux tôles parallèles a assemblées l'une à l'autre par des entretoises transversales b fixées par rivetage ou sertissage. Pour l'arrimage des ressorts c, il est habituellement prévu des embouts d en forme de crochets, aptes à coopérer de manière démontable avec l'une d'une rangée de petites tiges e rivées aux tôles a suivant une ligne orientée perpendiculairement à l'axe des ressorts.

La technique antérieure est illustrée par les documents DE-A-3 533 336 (MURATA KIKAI), FR-A-2 626 013 (STAUBLI), GB-A-298 758 (HARLING ET TODD) et EP-A-353 875 (YOKOI INDUSTRIES), ce dernier servant de fondement pour la première partie de la revendication 1.

Il convient ici d'observer que par suite des vitesses élevées de fonctionnement maintenant conférées aux machines à tisser, on exige désormais des registres des efforts de plus en plus importants, de sorte que les ruptures ou "casses" des ressorts deviennent relativement fréquentes. Or, si le remplacement d'un ressort cassé est assez aisé lorsque l'opération intéresse l'un des deux registres latéraux du paquet de registres parallèles prévu sur l'un des côtés du paquet de cadres de lisses, il n'en va plus de même lorsqu'il s'agit d'extraire un ressort cassé et d'en monter un neuf au niveau de l'un des registres intérieurs du paquet précité. En effet, la substitution implique le démontage et le remontage d'un nombre important de registres et de ressorts, les uns et les autres étant au surplus soumis à une très forte tension.

Il n'est pas sans intérêt de noter par ailleurs que par suite de leur profil, les embouts en forme de crochet qui assurent la fixation des ressorts sur les agrafes travaillent à la flexion et sont de ce fait le siège de ruptures fréquentes qui impliquent des interventions fastidieuses et des arrêts dans le fonctionnement de la machine à tisser considérée.

C'est à ces inconvénients qu'entend remédier la présente invention, laquelle a pour objet le registre de ressorts qui est défini à la revendication 1.

En fait l'invention consiste principalement à remplacer les tiges d'accrochage des agrafes par des boutonnières en forme d'oméga qui débouchent par une partie à profil rétréci sur le bord de ladite agrafe tourné en direction des ressorts, et qui s'ouvrent librement sur les faces latérales de cette agrafe afin de permettre le montage et le démontage, moyennant accès latéral, des embouts fixés aux extrémités de ces ressorts, lesdits embouts étant convenablement retenus en place à l'intérieur de ces boutonnières.

L'invention est revendiquée dans les revendications 1 à 4.

Le dessin annexé, donné à titre d'exemple, permettra de mieux comprendre l'invention, les caractéristiques qu'elle présente et les avantages qu'elle est susceptible de procurer :
Comme indiqué plus haut, fig. 1 est une vue en perspective illustrant l'agencement des attaches des registres classiques.
Fig. 2 est une vue en élévation montrant le montage d'un registre suivant l'invention sur l'un des côtés d'un métier à tisser.
Fig. 3 et 4 sont des coupes à plus grande échelle illustrant la conformation de l'une des deux agrafes du registre suivant fig. 2.

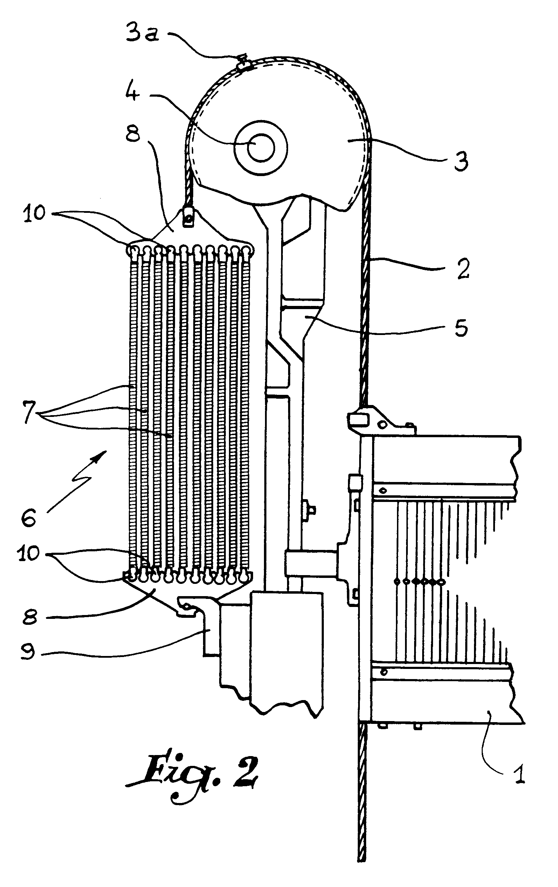

En fig. 2, la référence 1 désigne l'un des cadres de lisses qui sont montés sur un métier à tisser et dont chacun est manoeuvré verticalement par deux câbles 2. L'une des extrémités de chaque câble 2 est attachée à l'un des leviers d'une ratière ou autre mécanique, tandis que l'extrémité opposée est renvoyée par un levier oscillant 3 monté fou sur un axe horizontal 4 porté par la structure fixe 5 du métier. L'extrémité libre du câble 2, fixé au levier 3 en 3a, est attelée à un registre de rappel 6, formé par une nappe de ressorts verticaux 7 dont les extrémités sont arrimées à deux agrafes 8 ; l'agrafe supérieure 8 est fixée en bout du câble 2 de façon à se déplacer verticalement avec celui-ci, alors que l'agrafe inférieure 8 coopère avec un râtelier 9 solidaire de la structure fixe 5.

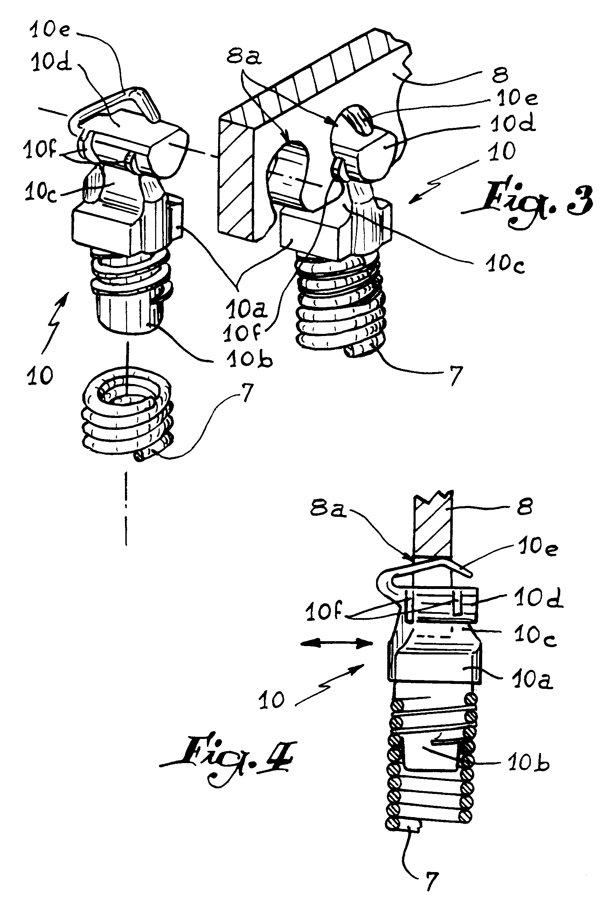

Comme représenté en fig. 3 et 4, chaque agrafe 8 est constituée par une pièce monobloc relativement épaisse, susceptible d'être directement obtenue par découpage-poinçonnage et présentant le profil triangulaire qui apparaît en fig. 2. Sur son bord horizontal qui est tourné en direction des ressorts 7, chaque pièce ou agrafe 8 est découpée d'une série de boutonnières 8a, en nombre égal à celui desdits ressorts ; fig. 3 fait bien apparaître le profil en oméga de chaque boutonnière 8 qui s'ouvre librement sur les faces latérales opposées de l'agrafe 8 et qui débouche sur le bord libre de celle-ci par une partie à profil rétréci.

Chacune des extrémités de chaque ressort 7 reçoit un embout 10 établi en matière synthétique et agencé pour coopérer avec l'une des boutonnières 8a de l'une ou l'autre des deux agrafes 8. Cet embout 10 comporte un corps principal 10a qui se raccorde d'une part avec une embase cylindrique 10b prévue filetée pour se visser dans l'extrémité d'un ressort 7, d'autre part avec une partie amincie ou col 10c solidaire d'une butée semi-cylindrique 10d elle-même pourvue d'une patte déformable 10e. On observera que la butée 10d comporte latéralement deux saillies 10f.

On comprend que l'embout 10 peut être dimensionné de façon à ce que la butée 10d vienne s'engager dans une boutonnière 8a moyennant introduction latérale à partir de l'une ou l'autre des faces de l'agrafe 8 envisagée. Le col 10c vient s'adapter dans le débouché rétréci de l'ouverture 8a, l'immobilisation de l'embout étant opérée dans le sens horizontal par encliquetage des saillies 10f contre les faces latérales de l'agrafe, dans le sens vertical par portée de la patte 10e contre la partie de la boutonnière qui est opposée au débouché rétréci, le tout comme clairement illustré en fig. 4.

Le retrait d'un ressort cassé et la mise en place d'un ressort neuf de remplacement peuvent être très aisément effectués, même lorsque l'intervention concerne un registre 6 qui se trouve à l'intérieur du paquet de registres prévus sur chaque côté du métier. Effectivement, le mouvement latéral de retrait ou de mise en place d'un embout 10 dans une boutonnière 8a peut être réalisé sans qu'il soit nécessaire de procéder au démontage et au remontage subséquent de ressorts autres que celui qui nécessite un remplacement.

On observera que les embouts 10 présentent un profil symétrique qui évite tout effort de flexion : ces embouts travaillent uniquement en traction suivant leur axe et comportent de ce fait, à encombrement égal, une résistance accrue par rapport aux embouts classiques en forme de crochets.

On conçoit que le profil précis de chaque embout 10 peut varier dans une certaine mesure pour autant qu'il assure la retenue du ressort correspondant et que sa mise en place comme son retrait puissent être obtenus moyennant un mouvement horizontal suivant l'axe de la boutonnière 8a à profil en oméga.

## Revendications

1. Registre de ressorts pour ratières et autres mécaniques de tissage du type négatif, comprenant au moins une agrafe (8) sur laquelle s'accrochent des embouts (10) prévus aux extrémités d'une série de ressorts parallèles (7), caractérisé en ce que l'agrafe (8) est découpée, au niveau de son bord qui est tourné en direction des ressorts (7), d'une série de boutonnières (8a) à profil en oméga qui débouchent par une partie rétrécie sur le bord considéré de l'agrafe et qui s'ouvrent librement sur les faces latérales de celle-ci afin de permettre le montage et le démontage des embouts (10) moyennant un déplacement orienté parallèlement à l'axe des boutonnières, c'est-à-dire perpendiculairement à l'axe des ressorts.

2. Registre suivant la revendication 1, caractérisé en ce que chaque embout (10) est pourvu de moyens (10e, 10f) aptes à assurer élastiquement sa retenue dans la boutonnière (8a).

3. Registre suivant la revendication 2, caractérisé en ce que le corps (10a) de chaque embout (10), pourvu à la façon usuelle d'une embase filetée (10b) propre à se visser dans l'extrémité du ressort (7) correspondant, se raccorde, par un col aminci (10c) conformé pour s'adapter dans le débouché rétréci d'une boutonnière (8a), à une butée transversale (10d) apte à se loger dans la boutonnière précitée, laquelle butée comporte d'une part deux saillies (10f) destinées à s'encliqueter de part et d'autre des faces latérales de l'agrafe, d'autre part une patte déformable (10e) tournée à l'opposé du col précité afin de prendre appui contre la partie de la boutonnière qui fait face au débouché rétréci.

4. Registre suivant l'une quelconque des revendications 1 à 3, caractérisé en ce que l'agrafe (8) est constituée par une pièce monobloc obtenue par découpage-poinçonnage.

## Claims

1. Set of springs for dobbies and other weaving mechanisms, of the negative type, comprising at least one clip element (8) on which are hooked end pieces (10) provided at the ends of a series of parallel springs (7), characterized in that the clip element (8) is cut out, at the level of its edge turned towards the springs (7), with a series of openings (8a) of omega profile which open out via a narrowed part on the edge in question of the clip element and which open out freely on the lateral faces of the latter in order to allow assembly and dismantling of the end pieces (10) against a displacement oriented parallel to the axis of the openings, i.e. perpendicularly to the axis of the springs.

2. Set according to Claim 1, characterized in that each end piece (10) is provided with means (10e, 10f) adapted to ensure, elastically, its retention in the opening (8a).

3. Set according to Claim 2, characterized in that the body (10a) of each end piece (10), provided in conventional manner with a threaded base (10b) adapted to screw in the end of the corresponding spring (7), is connected, by a thinned neck (10c) shaped to fit in the narrowed outlet of an opening (8a), to a transverse stop (10d) adapted to be housed in the said opening, which stop comprises, on the one hand, two projections (10f) intended to clip on either side of the lateral faces of the clip element, on the other hand a deformable tab (10e) turned opposite the said neck in order to abut against that part of the opening which faces the narrowed outlet.

4. Set according to any one of Claims 1 to 3, characterized in that the clip element (8) is constituted by a monobloc piece obtained by cutting and punching.

## Patentansprüche

1. Federanordnung für Schaftmaschinen und andere negative Fachbildungsmechanismen, wenigstens einen Bügel (8) umfassend, an dem Ansatzstücke (10) eingehängt werden, vorgesehen an den Enden einer Reihe von Federn (7),
**dadurch gekennzeichnet,**
daß der Bügel (8) an seinem in Richtung Federn (7) weisenden Rand eine Reihe von omegaförmigen Aussparungen (8a) aufweist, die durch einen verengten Teil an dem betreffenden Rand des Bügels münden und die sich auf den Seitenflächen von diesem frei öffnen, um die Montage und die Demontage der Ansatzstücke (10) mittels einer Verschiebung zu ermöglichen, die parallel zur Achse der Aussparungen gerichtetet ist, d.h. senkrecht zur Achse der Federn.

2. Anordnung nach Anspruch 1, dadurch gekennzeichnet, daß jedes Ansatzstück (10) mit Einrichtungen (10e, 10f) versehen ist, die elastisch seinen Halt in der Aussparung (8a) gewährleisten.

3. Anordnung nach Anspruch 2, dadurch gekennzeichnet, daß der Körper (10a) jedes Ansatzstücks (10), auf übliche Weise versehen mit einem gewindeten Sockel (10b), der in das Ende der entsprechenden Feder (7) geschraubt werden kann, durch einen verdünnten Hals (10c), geformt um in die verengte Mündung einer Aussparung (8a) zu passen, verbunden ist mit einem in besagter Aussparung sitzenden Queranschlag (10d), wobei dieser Anschlag einerseits zwei Vorsprünge (10f) umfaßt, um zu beiden Seiten der Seitenflächen des Bügels zu rasten, andererseits einen verformbaren Haken (10e), angebracht in entgegengesetzter Richtung zum vorerwähnten Hals, um sich abzustützen auf dem Teil der Aussparung, der der verengten Mündung gegenüberliegt.

4. Anordnung nach einem der Ansprüche 1 bis 3, dadurch gekennzeichnet, daß der Bügel (8) gebildet wird durch ein durch Stanzen hergestelltes Einblockstück.
